# EUROPÄISCHE PATENTSCHRIFT

(11) **EP 2 043 904 B1**
(45) Veröffentlichungstag und Bekanntmachung des Hinweises auf die Patenterteilung: **10.03.2010**
(21) Anmeldenummer: 07787600.1
(22) Anmeldetag: 16.07.2007
(51) Int. Cl.: B62D 53/12, B60D 1/62

(54) **LEITUNGSABFÜHRUNG FÜR EINEN AUFLIEGER EINES SATTELZUGES**
EXTERNAL LINE CONNECTION FOR A SEMITRAILER OF A SEMITRAILER TRUCK
SORTIE DE LIGNE POUR SEMI-REMORQUE DE TRAIN ROUTIER

(30) Priorität: 18.07.2006 DE 102006033900
(43) Veröffentlichungstag der Anmeldung: 08.04.2009
(73) Patentinhaber: Jost-Werke GmbH, 63263 Neu-Isenburg (DE)
(72) Erfinder: ALGÜERA, José Manuel, 63739 Aschaffenburg (DE); EIERMANN, Michael, 64319 Pfungstadt (DE)
(74) Vertreter: Mehler, Klaus
(86) Internationale Anmeldenummer: PCT/EP2007/057334
(87) Internationale Veröffentlichungsnummer: WO 2008/009659

(56) Entgegenhaltungen:
- EP-A- 0 084 712
- EP-A- 0 816 211
- DE-A1-102004 044 992
- FR-A- 2 580 237

## Beschreibung

Die Erfindung betrifft eine Leitungsabführung für einen Auflieger eines Sattelzuges, umfassend eine Rahmenkonstruktion mit einer auf der Unterseite abschließenden Aufliegerplatte, an welcher ein Königszapfen angeordnet ist, und einer um den Königszapfen schwenkbar angeordneten Steckerkonsole, aus der mindestens ein Leitungsstrang herausgeführt und mit einem Bordnetz des Aufliegers verbindbar ist, wobei die Steckerkonsole an einem an der Aufligerplatte schwenkbar gelagerten Drehteller angreift, und wobei der mindestens eine Leitungsstrang auf der Oberseite des Drehtellers herausgeführt. Eine solche Leitungsabführung ist aus der EP 0 084 712 A bekannt.

Derartige schwenkbare Steckerkonsolen kommen beispielsweise in Verbindung mit automatisiert arbeitenden Steckkupplungssystemen von Versorgungsleitungen zum Einsatz, wie sie auch in der DE 101 55 056 offenbart sind. Bei dem bekannten System greift schwenkbar um den Königszapfen eine Steckerkonsole an, welche beim Ankuppeln des Aufliegers in die Einfahröffnung der Sattelkupplung eingefahren wird. In dieser Endstellung erfolgt dann eine Kontaktierung einer zugfahrzeugseitigen Steckerbuchse mit einem in der Steckerkonsole angeordneten Stecker. In einer einfachen Ausführung sind die Versorgungsleitungen, beispielsweise Strom- und/oder Druckluftleitungen, nach hinten aus der Steckerkonsole herausgeführt und mit einem Durchhang derart an dem Auflieger befestigt, dass bei Kurvenfahrten ein Ausschwenken des Aufliegers möglich ist. Aufgrund des Leitungsdurchhanges kam es jedoch immer wieder zu Leitungsbeschädigungen oder -abrissen.

Um die Gefahr von Leitungsabrissen zu verringern, wird in der DE 10 2004 044 992 vorgeschlagen, mit Hilfe eines an der Unterseite des Aufliegers anbringbaren Leitungsspeichers die Versorgungsleitungen federvorgespannt zu straffen und während einer Kurvenfahrt ein Abwickeln der Leitung zu ermöglichen. Hierfür umfasst der bekannte Leitungsspeicher eine flache Seilscheibe als Wickeltrommel, auf der ein Abschnitt der Versorgungsleitung aufgewickelt ist. Der wesentliche Nachteil dieser Vorrichtung liegt jedoch in der geringen Lebensdauer der Versorgungsleitung, da der Wickelumfang der Versorgungsleitung relativ gering ist und dadurch die Versorgungsleitung einer erheblichen Biegebeanspruchung unterliegt, die häufig bereits zu einer Vorschädigung des Leitungsmaterials führt. Erschwerend kommt noch hinzu, dass die Versorgungsleitung während Kurvenfahrten einer Wechselbiegung unterliegt, wodurch mitunter irreversible Schäden an dem Material der Versorgungsleitung hervorgerufen werden können. Ein weiterer Nachteil des bekannten Leitungsspeichers besteht darin, dass aufgrund der exponierten Lage unterhalb des Aufliegers die nach ISO vorgeschriebene Aufliegerkontur nicht eingehalten wird.

Aus diesem Grund liegt der Erfindung die Aufgabe zugrunde, eine verschleißarme Leitungsabführung von einer Steckerkonsole zu dem Auflieger bereitzustellen, welche der vorgeschriebenen ISO-Kontur entspricht.

Die Aufgabe wird erfindungsgemäß mit einer Leitungsabführung gelöst, bei welcher der mindestens ein Leitungsstrang in Teilsträngen beidseitig hinsichtlich des Königszapfens auf dem Drehteller aufgelegt ist und bei welcher die Teilstränge über eine Vorspanneinrichtung unter einer Zugspannung gehalten sind.

Die Teilstränge können beide identisch aufgebaut sein und beispielsweise jeweils eine Stromleitung und eine Druckluftleitung enthalten. Es ist auch denkbar, zusätzlich Steuerleitungen in einem oder beiden Teilsträngen vorzusehen. Alternativ hierzu ist es auch möglich, alle Versorgungsleitungen in einem ersten Teilstrang gebündelt unterzubringen, so dass der zweite Teilstrang beispielsweise als Gurt, Schlauch oder Seil ausgebildet sein kann und ausschließlich der mechanischen Kraftübertragung dient. Zur Zugentlastung sollte in jedem Teilstrang der Leitung ein Drahtseil oder ähnliches vorhanden sein.

Der Vorteil der erfindungsgemäßen Leitungsabführung liegt darin, dass die-Teilstränge im Fahrbetrieb ausschließlich in einer Richtung auf Biegung beansprucht werden und sich lediglich der Biegradius bei Kurvenfahrten des Sattelzuges in geringem Maße ändert. Darüber hinaus kommt es zu keiner nennenswerten Relativbewegung zwischen dem jeweiligen Teilstrang und dem Drehteller, so dass es zu keinem Verschleiß aufgrund eines reibungsbedingten Materialabtrags kommt. Darüber hinaus ist der Kabelabgang besonders geschützt.

In einer besonderen Ausführungsform ist der Drehteller konzentrisch um den Königszapfen angeordnet. Dieses ermöglicht die Verwendung der handelsüblichen standardisierter Königszapfen und erleichtert im Verschleißfall den Austausch des Königszapfens.

Vorteilhafterweise ist der Königszapfen drehfest mit der Aufliegerplatte verbunden. Der Kraftfluss im Fahrbetrieb verläuft von dem Zugfahrzeug über den Königszapfen auf den Auflieger. Aus diesem Grund unterliegt der Königszapfen einer äußerst hohen mechanischen Belastung und kann fest mit der Aufliegerplatte, vorzugsweise unter Zuhilfenahme einer verstärkenden Lagerplatte, verbunden sein. Bei einem drehbar gelagerten Königszapfen würde der Kraftfluss von dem Königszapfen über ein Lager auf den Auflieger übertragen, so dass ein zusätzliches bewegliches Bauteil im Kraftfluss liegen würde. Auf eine derartige Konstruktion wurde zugunsten einer robusten Bauweise verzichtet.

Vorzugsweise umfasst die Vorspanneinrichtung zwei gegensinnig verschwenkbare Spannarme, auf denen jeweils ein Teilstrang aufgelegt ist. Es hat sich dann als besonders günstig herausgestellt, wenn die Spannarme an ihrem jeweils äußeren ersten Ende schwenkbar befestigt sind und an ihrem gegenüberliegenden zweiten Ende jeweils ein Federelement angreift. Die Befestigung der Spannarme kann insbesondere an der Rahmenkonstruktion erfolgen. Beide Federelemente, die beispielsweise als Schraubenfeder ausgebildet sein können, übertragen eine Vorspannkraft auf den dazugehörigen Spannarm, so dass beide Teilstränge gleich weit aus dem Drehteller herausgezogen sind. Hierzu sollten gleichartig beschaffene Federelemente mit vergleichbaren Federkonstanten verwendet werden.

Die Federelemente können parallel zur Fahrzeuglängsachse ausgerichtet sein. Dadurch greifen die Federelemente über einen weiten Bereich des Schwenkwinkels der Spannarme annähernd rechtwinklig an diesen an und tragen dadurch zu einer effektiven Drehmomentübertragung und somit zu einem effektiven Spannvorgang der Teilstränge bei.

Die Federelemente sollten bei einer in Fahrzeuglängsachse ausgerichteten Steckerkonsole mit einem Teil ihres maximalen Federweges beansprucht sein. Dieses ermöglicht je nach Kurvenrichtung und somit Drehsinn des Drehtellers entweder eine Kontraktion des Federelementes und somit ein weiteres unter Spannung halten des in Drehrichtung liegenden Teilstranges oder ein entsprechendes Nachführen des in den Drehteller einlaufenden Teilstranges.

Vorteilhafterweise sind die Spannarme bei einer in Fahrzeuglängsachse ausgerichteten Steckerkonsole rechtwinklig zur Fahrzeuglängsachse ausgerichtet. Hieraus resultiert der Vorteil, dass beiden Spannarmen in beiden Richtungen ein gleich weiter Schwenkweg zur Verfügung steht und in beiden Kurvenrichtungen die Federelemente in gleichem Maße beansprucht sind.

Günstigerweise sind die Spannarme vertikal zueinander versetzt angeordnet. Durch diese konstruktive Ausgestaltung schwenken bei wechselnden Kurvenrichtungen die Schwenkarme aneinander vorbei, ohne sich zu berühren oder gegenseitig zu behindern.

Gemäß einer besonderen Ausgestaltung sind die Spannarme unabhängig von der Stellung des Zugfahrzeugs zu dem Auflieger stets annähernd parallel zueinander ausgerichtet, da diese einen gegensinnige aber dem Betrag nach gleichweiten Schwenkweg zurücklegen. Dieses setzt unter anderem auch gleich lange Spannarme voraus und minimiert den Raumbedarf der Leitungsabführung. Darüber hinaus ist es möglich, beide Spannarme baulich identisch auszuführen, so dass sich die Bevorratung der Ersatzteile vereinfacht.

Vorzugsweise weist die Rahmenkonstruktion auf der Oberseite einen Ladeboden auf. Der Ladeboden trägt die von dem Auflieger zu transportierenden Güter. In dem Ladeboden ist vorzugsweise oberhalb der Kabelabführung ein Wartungsdeckel vorgesehen. Die Teilstränge und die Vorspanneinrichtung sind in einem freien Bauraum zwischen der Aufliegerplatte und dem Ladeboden angeordnet und dadurch vor äußeren Einflüssen geschützt untergebracht.

Vorteilhafterweise steht der Drehteller gegenüber der Aufliegerplatte auf der Unterseite zurück. Üblicherweise liegt die Aufliegerplatte auf der Sattelkupplung auf und schwenkt bei Kurvenfahrten gegenüber dieser hin und her. Durch die gegenüber der Aufliegerplatte zurückversetzte Anordnung des Drehtellers befindet sich dieser außerhalb des Einwirkungsbereiches der Sattelkupplung, wodurch das Risiko von Beschädigungen und der Verschleiß der gesamten Leitungsabführung erheblich verringert werden.

Bei einer weiteren bevorzugten Ausführungsform umfasst die Aufliegerplatte eine Ausnehmung und eine Lagerplatte, wobei die Lagerplatte die Ausnehmung übergreift und der Aufnahme des Königszapfens dient. Die Lagerplatte leitet somit die auf den Königszapfen einwirkenden Lasten großflächig in den Auflieger beziehungsweise dessen Aufliegerplatte ein.

Der Drehteller kann beispielsweise auf einem der Lagerplatte zugeordneten Lagerflansch reibschlüssig aufliegen. Dieser Lagerflansch kann zum Beispiel eine Hinterschneidung oder ein angeformter Kragen der Lagerplatte sein. Alternativ hierzu ist es auch möglich, den Lagerflansch als Stützring an der Lagerplatte anzuschrauben. Der Drehteller liegt dann lose von oben auf dem Lagerflansch auf. Diese einfache Art der Lagerung des Drehtellers ist äußerst unempfindlich gegen Schmierfett der Sattelkupplung und andere äußere Einflüsse. Darüber hinaus weist eine derartige Lagerung gegenüber einem Wälzlager eine deutlich geringere Bauhöhe auf.

Günstigerweise weist die Lagerplatte eine ringförmige Vertiefung auf, in welcher die Teilstränge verlaufen. Diese Vertiefung sollte hinsichtlich ihrer Höhe so bemessen sein, dass sowohl der Drehteller als auch die darin eingelegten Teilstränge frei in Umfangsrichtung auf- und ablaufen können. Dabei sollte der Drehteller die Teilstränge in einer dafür vorgesehenen Nut führen, deren Höhe nur geringfügig größter als der Durchmesser eines jeden Teilstranges beziehungsweise des größeren der beiden Teilstränge ist. Die Nut kann auch gestuft ausgeführt sein, so dass die Leitungen der Teilstränge sich nicht gegeneinander verdrillen können.

Es ist auch von Vorteil, wenn die ringförmige Vertiefung nach unten von dem Drehteller weitgehend abgeschlossen ist, da hierdurch der Eintrag von Schmutz und Schmierfett der Sattelkupplung in die ringförmige Vertiefung minimiert ist.

Zum besseren Verständnis wird die Erfindung nachfolgend anhand von sechs Figuren näher erläutert. Es zeigen dabei die:
- **Fig. 1:**: eine perspektivische Unteransicht auf eine Leitungsabführung;
- **Fig. 2:**: eine perspektivische Draufsicht auf eine Leitungsabführung;
- **Fig. 3:**: einen Querschnitt entlang der Schnittlinie A:A in Fig. 2;
- **Fig. 4:**: einen vergrößerten Querschnitt gemäß Fig. 3;
- **Fig. 5:**: eine Draufsicht auf eine Leitungsabführung in Geradeaus-Stellung und
- **Fig. 6:**: eine Draufsicht auf eine Leitungsabführung bei maximalem Einschlag des Drehtellers.

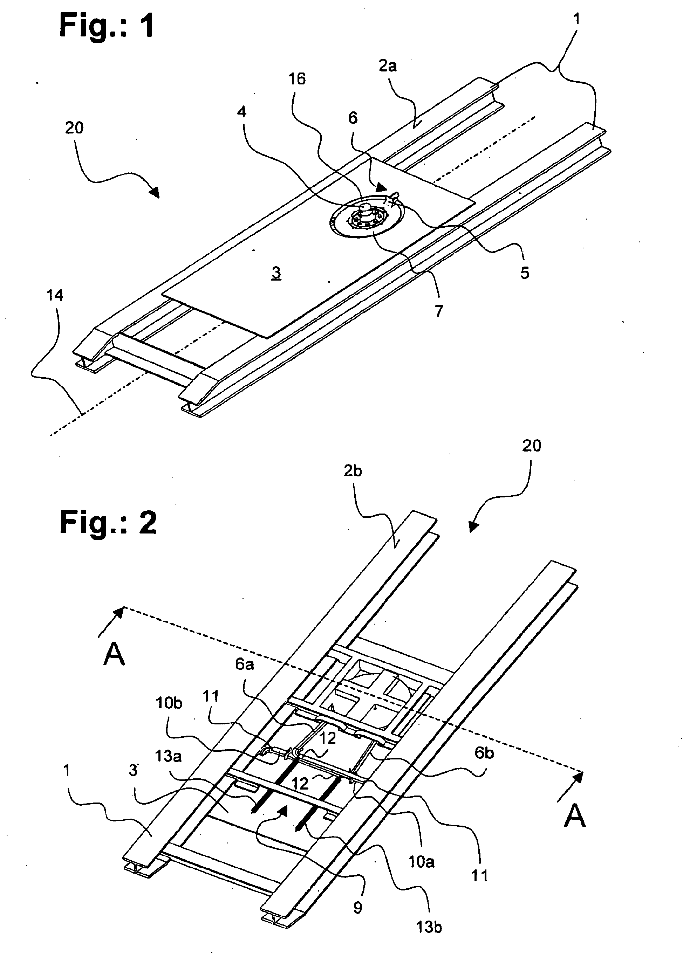

Die Figur 1 zeigt eine perspektivische-Unteransicht auf eine erfindungsgemäße Leitungsabführung mit einer Rahmenkonstruktion 1, dessen Unterseite 2a mit einer Aufliegerplatte 3 abgedeckt ist. Die Aufliegerplatte 3 stützt sich in angekuppeltem Zustand des Aufliegers auf einer nicht dargestellten Sattelkupplung des Zugfahrzeuges ab.

In einem Bereich der Fahrzeuglängsachse 14 weist die Aufliegerplatte 3 eine kreisrunde Ausnehmung 16 auf. Zentrisch innerhalb der Ausnehmung 16 befindet sich ein Königszapfen 4, welcher bei angekuppeltem Zugfahrzeug in Wirkeingriff mit der Sattelkupplung gebracht und darin verriegelt wird. Der Königszapfen 4 ist bezüglich der Aufliegerplatte 3 drehfest angeordnet. Die Ausnehmung 16 ist um den Königszapfen 4 herum mit einem drehbar gelagerten Drehteller 7 abgedeckt. An dem Drehteller 7 ist beispielhaft eine Steckerkonsole 5 zu erkennen, die in angekuppeltem Zustand des Aufliegers mit einer komplementär ausgebildeten Steckerbuchse des Zugfahrzeuges zusammengeführt und dadurch verbunden wird. Ein aufliegerseitiger Leitungsstrang 6 ist auf der königszapfenabgewandten Seite der Steckerkonsole 5 aus dieser herausgeführt. Der Leitungsstrang 6 kann dann als Einzelstrang oder bereits als mehrere Teilstränge 6a, 6b (siehe Figur 2) durch den Drehteller 7 hindurchgeführt sein.

In der Figur 2 ist die vorstehend beschriebene Leitungsabführung in einer perspektivischen Draufsicht dargestellt. Dabei ist zu erkennen, dass beidseitig des hier überbauten Drehtellers 7 (siehe Figur 1) jeweils ein erster Teilstrang 6a und ein zweiter Teilstrang 6b hervortritt und zu einer Vorspanneinrichtung 9 verläuft. Die Vorspanneinrichtung 9 umfasst unter anderem einen ersten und einen zweiten Spannarm 10a, 10b. Die Spannarme 10a, 10b sind an ihrem ersten äußeren Ende 11 schwenkbar um eine vertikale Achse an der Rahmenkonstruktion 1 angebracht und nehmen an ihrem gegenüberliegenden zweiten Ende 12 jeweils den dazugehörigen Teilstrang 6a, 6b auf. Ebenfalls an dem zweiten Ende 12 greift an jedem der beiden Spannarme 10a, 10b ein Federelement 13a, 13b an.

In der gezeigten Stellung befindet sich der Sattelzug in Geradeausfahrt, so dass die Steckerkonsole 5 im Bereich der Fahrzeuglängsachse 14 (siehe Figur 1) ausgerichtet ist und die Spannarme 10a, 10b weitgehend rechtwinklig zur Fahrzeuglängsachse stehen. Beide Federelemente 13a, 13b haben in der Fahrzeugstellung Geradeausfahrt einen gleichen Federweg zurückgelegt, der einerseits auch bei weiterer Annäherung des jeweiligen Spannarmes 10a, 10b noch eine Zugwirkung ermöglicht und andererseits eine weitere Längung des jeweiligen Federelementes 13a, 13b zulässt. Dieses ist notwendig, damit ein Auslenken der Spannarme 10a, 10b in beiden Schwenkrichtungen bei Kurvenfahrten des Sattelzuges möglich ist. Damit sich dabei die Schwenkarme 10a, 10b nicht gegenseitig behindern, sind diese vertikal versetzt zueinander angeordnet.

Der Königszapfen 4, der Drehteller 7, der Leitungsstrang 6 mit den Teilsträngen 6a, 6b und die Vorspanneinrichtung 9 sind dabei in einem Frontmodul 20 zusammengefasst, welches mittels der Rahmenkonstruktion 1 an einem nicht gezeigten Fahrzeugrahmen des Aufliegers befestigbar ist.

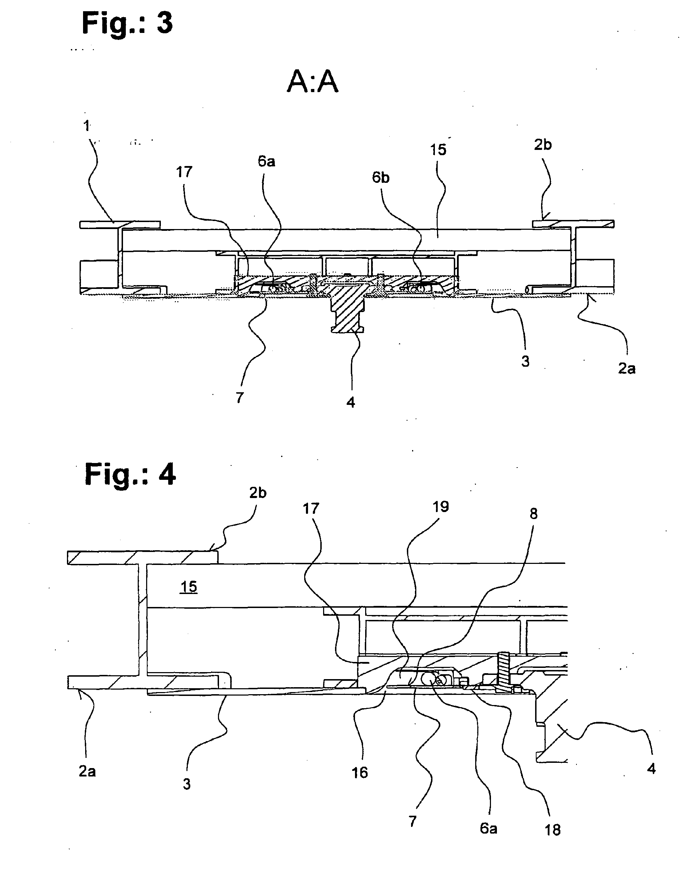

Die Figuren 3 und 4 zeigen einen Querschnitt entlang der Schnittlinie A:A in Figur 2, wobei es sich bei der Figur 4 um einen vergrößerten Ausschnitt der Figur 3 handelt. An der Oberseite 2b der Rahmenkonstruktion 1 befindet sich ein Ladeboden 15, auf dem später die zu transportierenden Güter abgestellt werden. Auf der gegenüberliegenden Unterseite 2a ist die Rahmenkonstruktion 1 mit der Aufliegerplatte 3 verschlossen. Die Aufliegerplatte 3 ist in ihrem mittleren Bereich von der Ausnehmung 16 durchbrochen. Nach oben wird diese Ausnehmung 16 von einer Lagerplatte 17 überbrückt, die vorzugsweise an ihrem umlaufenden Rand mit der Aufliegerplatte 3 verschweißt ist. Die Lagerplatte 17 dient zunächst der Aufnahme des Königszapfens 4 und einem den Königszapfen 4 konzentrisch umgebenden Lagerflansch 18, der drehfest an der Lagerplatte 17 angebracht ist. Auf dem Lagerflansch 18 wiederum liegt lose der Drehteller 7 auf und ist dadurch in beide Drehrichtungen gegenüber der Lagerplatte 17 bewegbar.

Auf der Oberseite 8 des Drehtellers 7 liegt jeweils beidseitig des Königszapfens 4 der Teilstrang 6a beziehungsweise Teilstrang 6b auf. Jeder Teilstrang 6a, 6b setzt sich aus einer innen liegenden durchmesserkleineren Druckluftleitung und einer außen liegenden durchmessergrößeren Stromleitung zusammen. Damit für den Drehteller 7 nebst Teilsträngen 6a, 6b ausreichend freier Bauraum vorhanden ist, weist die Lagerplatte 17 eine ringförmige Vertiefung 19 auf. Es ist auch zu erkennen, dass der Drehteller 7 in senkrechter Richtung gegenüber der Aufliegerplatte 3 in der Ausnehmung 16 zurückversetzt ist. Hierdurch wird eine Beeinflussung der Funktion des Drehtellers 7 durch eine in Kontakt mit der Aufliegerplatte stehende Sattelkupplung vermieden.

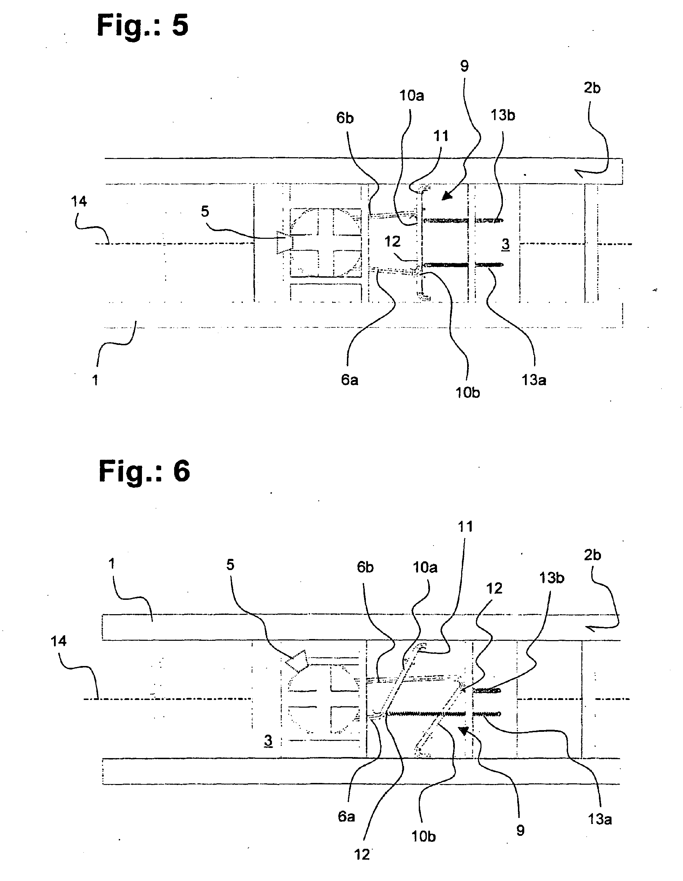

Die Figuren 5 und 6 zeigen vergleichend zwei unterschiedliche Funktionsstellungen der Vorspanneinrichtung 9 bei Geradeausfahrt und Kurvenfahrt des Sattelzuges. In Figur 5 befindet sich der Sattelzug in Geradeausfahrt und die gestrichelt angedeutete, weil in der Draufsicht eigentlich nicht sichtbare, Steckerkonsole 5 wird durch die komplementär ausgeformte Einfahröffnung der nicht gezeigten Sattelkupplung in der Fahrzeuglängsachse 14 fixiert. In dieser Ausgangsstellung liegen beide Spannarme 10a, 10b übereinander und die Federelemente 13a, 13b haben einen Teil ihres maximalen Federweges zurückgelegt.

In der Darstellung der Figur 6 fährt das Zugfahrzeug eine scharfe Rechtskurve. Da die Steckerkonsole 5 formschlüssig in der Einfahröffnung der Sattelkupplung gehalten ist, wandert diese im Uhrzeigersinn durch eine Schwenkbewegung des Drehtellers 7 aus der Fahrzeuglängsachse 14 heraus. Beide Teilstränge 6a, 6b sind mit ihrem Ursprung ortsfest mit der Steckerkonsole 5 verbunden. Dadurch wurde der Teilstrang 6a von dem Drehteller 7 eingezogen und der erste Spannarm 10a ist entgegen der Zugkraft des Federelementes 13a in Richtung des Drehtellers 7 geschwenkt. In gleichem Maße hat sich das Federelement 13b zusammengezogen und dadurch den Spannarm 10b beziehungsweise dessen zweites Ende 12 von dem Drehteller 7 weggezogen und dadurch den Teilstrang 6b unter Spannung gehalten.

### Bezugszeichenliste

- 1: Rahmenkonstruktion
- 2a: Unterseite Rahmenkonstruktion
- 2b: Oberseite Rahmenkonstruktion
- 3: Aufliegerplatte
- 4: Königszapfen
- 5: Steckerkonsole
- 6: Leitungsstrang
- 6a: erster Teilstrang
- 6b: zweiter Teilstrang
- 7: Drehteller
- 8: Oberseite Drehteller
- 9: Vorspanneinrichtung
- 10a: erster Spannarm
- 10b: zweiter Spannarm
- 11: erstes Ende Spannarm
- 12: zweites Ende Spannarm
- 13a: erstes Federelement
- 13b: zweites Federelement
- 14: Fahrzeuglängsachse
- 15: Ladeboden
- 16: Ausnehmung Aufliegerplatte
- 17: Lagerplatte
- 18: Lagerflansch
- 19: ringförmige Vertiefung Lagerplatte
- 20: Frontmodul

## Patentansprüche

1. Leitungsabführung für einen Auflieger eines Sattelzuges, umfassend eine Rahmenkonstruktion (1) mit einer auf der Unterseite (2a) abschließenden Aufliegerplatte (3), an welcher ein Königszapfen (4) angeordnet ist, und einer um den Königszapfen (4) schwenkbar angeordneten Steckerkonsole (5), aus der mindestens ein Leitungsstrang (6) herausgeführt und mit einem Bordnetz eines Aufliegers verbindbar ist, wobei die Steckerkonsole (5) an einem an der Aufliegerplatte (3) schwenkbar gelagerten Drehteller (7) angreift und wobei der mindestens eine Leitungsstrang (6) auf der Oberseite (8) des Drehtellers (7) herausgeführt ist,
**dadurch gekennzeichnet,**
**dass** der Leitungsstrang (6) in Teilsträngen (6a, 6b) beidseitig hinsichtlich des Königszapfens (4) auf dem Drehteller (7) aufgelegt ist und
**dass** die Teilstränge (6a, 6b) über eine Vorspanneinrichtung (9) unter einer Zugspannung gehalten sind.

2. Leitungsabführung nach Anspruch 1, **dadurch gekennzeichnet, dass** der Drehteller (7) konzentrisch um den Königszapfen (4) angeordnet ist.

3. Leitungsabführung nach Anspruch 1 oder 2, **dadurch gekennzeichnet, dass** der Königszapfen (4) drehfest mit der Aufliegerplatte (3) verbunden ist.

4. Leitungsabführung nach einem der Ansprüche 1 bis 3, **dadurch gekennzeichnet, dass** die Vorspanneinrichtung (9) zwei gegensinnig verschwenkbare Spannarme (10a, 10b) umfasst, auf denen jeweils ein Teilstrang (6a, 6b) aufgelegt ist.

5. Leitungsabführung nach Anspruch 4, **dadurch gekennzeichnet, dass** die Spannarme (10a, 10b) zwischen der Aufliegerplatte (3) und dem Ladeboden (15) angeordnet sind.

6. Leitungsabführung nach Anspruch 4 oder 5, **dadurch gekennzeichnet, dass** die Spannarme (10a, 10b) an ihrem jeweils äußeren ersten Ende (11) schwenkbar befestigt und über ein Federelement (13a, 13b) vorgespannt sind.

7. Leitungsabführung nach Anspruch 6, **dadurch gekennzeichnet, dass** das Federelement (13a, 13b) jeweils an einem zweiten gegenüberliegenden Ende (12) des Spannarmes (10a, 10b) angreift.

8. Leitungsabführung nach Anspruch 6 oder 7, **dadurch gekennzeichnet, dass** die Federelemente (13a, 13b) parallel zur Fahrzeuglängsachse (14) ausgerichtet sind.

9. Leitungsabführung nach einem der Ansprüche 6 bis 8, **dadurch gekennzeichnet, dass** die Federelemente (13a, 13b) bei einer in Fahrzeuglängsachse (14) ausgerichteten Steckerkonsole (5) mit einem Teil ihres maximalen Federweges beansprucht sind.

10. Leitungsabführung nach einem der Ansprüche 4 bis 9, **dadurch gekennzeichnet, dass** die Spannarme (10a, 10b) bei einer in Fahrzeuglängsachse (14) ausgerichteten Steckerkonsole (5) rechtwinklig zur Fahrzeuglängsachse (14) ausgerichtet sind.

11. Leitungsabführung nach einem der Ansprüche 4 bis 10, **dadurch gekennzeichnet, dass** die Spannarme (10a, 10b) in verschiedenen Höhenlagen angeordnet sind.

12. Leitungsabführung nach einem der Ansprüche 4 bis 11, **dadurch gekennzeichnet, dass** die Spannarme (10a, 10b) stets annähernd parallel zueinander ausgerichtet sind.

13. Leitungsabführung nach einem der Ansprüche 1 bis 12, **dadurch gekennzeichnet, dass** die Rahmenkonstruktion (1) auf der Oberseite (2b) einen Ladeboden (15) aufweist.

14. Leitungsabführung nach einem der Ansprüche 1 bis 13, **dadurch gekennzeichnet, dass** der Drehteller (7) gegenüber der Aufliegerplatte (3) auf der Unterseite (2a) zurücksteht.

15. Leitungsabführung nach einem der Ansprüche 1 bis 14, **dadurch gekennzeichnet, dass** die Aufliegerplatte (3) eine Ausnehmung (16) und eine Lagerplatte (17) umfasst, wobei die Lagerplatte (17) die Ausnehmung (16) übergreift und der Aufnahme des Königszapfens (4) dient.

16. Leitungsabführung nach Anspruch 15, **dadurch gekennzeichnet, dass** der Drehteller (7) auf einem der Lagerplatte (17) zugeordneten Lagerflansch (18) reibschlüssig aufliegt.

17. Leitungsabführung nach Anspruch 15 oder 16, **dadurch gekennzeichnet, dass** die Lagerplatte (17) eine ringförmige Vertiefung (19) aufweist, in welcher die Teilstränge (6a, 6b) verlaufen.

18. Leitungsabführung nach Anspruch 17, **dadurch gekennzeichnet, dass** die ringförmige Vertiefung (19) nach unten von dem Drehteller (7) weitgehend abgeschlossen ist.

## Claims

1. External line connection for a semitrailer of a semitrailer vehicle, comprising a frame construction (1) having a semitrailer plate (3) which closes at the lower side (2a) and on which a kingpin (4) is arranged, and having a connection console (5) which is arranged so as to pivot about the kingpin (4) and out of which at least one line strand (6) extends and can be connected to an onboard network of the semitrailer,
with the connection console (5) engaging with a rotary plate (7) which is supported pivotably on the semitrailer plate (3) and the at least one line strand (6) extending at the upper side (8) of the rotary plate (7),
**characterised in that** the line strand is arranged in part-strands (6a, 6b) at both sides with respect to the kingpin on the rotary plate (7),
and **in that** the part-strands (6a, 6b) are retained under a tensile load by means of a pretensioning device (9).

2. External line connection according to claim 1, **characterised in that** the rotary plate (7) is arranged concentrically around the kingpin (4).

3. External line connection according to claim 1 or claim 2, **characterised in that** the kingpin (4) is connected to the semitrailer plate (3) in a rotationally secure manner.

4. External line connection according to any one of claims 1 to 3, **characterised in that** the pretensioning device (9) comprises two tensioning arms (10a, 10b) which can be pivoted in opposite directions and on which a part-strand (6a, 6b) is arranged.

5. External line connection according to claim 4, **characterised in that** the tensioning arms (10a, 10b) are arranged between the semitrailer plate (3) and the loading floor (15).

6. External line connection according to claim 4 or claim 5, **characterised in that** the tensioning arms (10a, 10b) are pivotably secured at their outermost first end (11) and are pretensioned by means of a resilient element (13a, 13b).

7. External line connection according to claim 6, **characterised in that** the resilient element (13a, 13b) engages with a second opposite end (12) of the tensioning arm (10a, 10b).

8. External line connection according to claim 6 or claim 7, **characterised in that** the resilient elements (13a, 13b) are orientated so as to be parallel with the longitudinal axis (14) of a vehicle.

9. External line connection according to any one of claims 6 to 8, **characterised in that** the resilient elements (13a, 13b) are loaded with a portion of the maximum resilient travel thereof in a connection console (5) which is orientated in a longitudinal axis (14) of a vehicle.

10. External line connection according to any one of claims 4 to 9, **characterised in that** the tensioning arms (10a, 10b) are orientated at right-angles to the longitudinal axis (14) of a vehicle in a connection console (5) which is orientated in a longitudinal axis (14) of a vehicle.

11. External line connection according to any one of claims 4 to 10, **characterised in that** the tensioning arms (10a, 10b) are arranged in different vertical positions.

12. External line connection according to any one of claims 4 to 11, **characterised in that** the tensioning arms (10a, 10b) are always orientated so as to be substantially parallel with each other.

13. External line connection according to any one of claims 1 to 12, **characterised in that** the frame construction (1) has a loading floor (15) at the upper side (2b).

14. External line connection according to any one of claims 1 to 13, **characterised in that** the rotary plate (7) is recessed at the lower side (2a) relative to the semitrailer plate (3).

15. External line connection according to any one of claims 1 to 14, **characterised in that** the semitrailer plate (3) comprises a recess (16) and a bearing plate (17), the bearing plate (17) engaging over the recess (16) and serving to receive the kingpin (4).

16. External line connection according to claim 15, **characterised in that** the rotary plate (7) is supported on a bearing flange (18) associated with the bearing plate (17) in a frictionally engaged manner.

17. External line connection according to claim 15 or claim 16, **characterised in that** the bearing plate (17) has an annular recess (19), in which the part-strands (6a, 6b) extend.

18. External line connection according to claim 17, **characterised in that** the annular recess (19) is substantially closed by the rotary plate (7) in a downward direction.

## Revendications

1. Sortie de ligne pour un semi-remorque d'un camion à semi-remorque, comportant une structure de cadre (1) avec une plaque d'attelage (3), qui ferme sur la face inférieure (2a) et sur laquelle est disposé un pivot central (4), et une console de connexion (5) montée pivotante autour du pivot central (4), hors de laquelle est guidé au moins un faisceau de lignes (6) et qui peut être reliée à un réseau de bord d'un semi-remorque, ladite console de connexion (5) étant appliquée sur un plateau tournant (7), monté pivotant sur la plaque d'attelage (3), et ledit au moins un faisceau de lignes (6) est guidé pour sortir du plateau tournant (7) sur la face supérieure (8) de celui-ci,
**caractérisée**
**en ce que** le faisceau de lignes (6) est posé en faisceaux partiels (6a, 6b) sur le plateau tournant (7) de part et d'autre du pivot central (4), et
**en ce que** les faisceaux partiels (6a, 6b) sont maintenus sous contrainte de traction par l'intermédiaire d'un dispositif de précontrainte (9).

2. Sortie de ligne selon la revendication 1, **caractérisée en ce que** le plateau tournant (7) est disposé concentriquement autour du pivot central (4).

3. Sortie de ligne selon la revendication 1 ou 2, **caractérisée en ce que** le pivot central (4) est relié de manière solidaire en rotation avec la plaque d'attelage (3).

4. Sortie de ligne selon l'une quelconque des revendications 1 à 3, **caractérisée en ce que** le dispositif de précontrainte (9) comporte deux bras tendeurs (10a, 10b), qui sont aptes à pivoter en sens opposé et sur chacun desquels est posé un faisceau partiel (6a, 6b).

5. Sortie de ligne selon la revendication 4, **caractérisée en ce que** les bras tendeurs (10a, 10b) sont disposés entre la plaque d'attelage (3) et le fond de chargement (15).

6. Sortie de ligne selon la revendication 4 ou 5, **caractérisée en ce que** les bras tendeurs (10a, 10b) sont fixés de manière pivotante au niveau de leur première extrémité (11) extérieure respective et sont précontraints par un élément de ressort (13a, 13b).

7. Sortie de ligne selon la revendication 6, **caractérisée en ce que** l'élément de ressort (13a, 13b) est appliqué respectivement à une deuxième extrémité (12) opposée du bras tendeur (10a, 10b).

8. Sortie de ligne selon la revendication 6 ou 7, **caractérisée en ce que** les éléments de ressort (13a, 13b) sont orientés parallèlement à l'axe longitudinal (14) du véhicule.

9. Sortie de ligne selon l'une quelconque des revendications 6 à 8, **caractérisée en ce que,** en présence d'une console de connexion (5) orientée dans l'axe longitudinal (14) du véhicule, les éléments de ressort (13a, 13b) sont sollicités avec une partie de leur trajectoire de ressort maximale.

10. Sortie de ligne selon l'une quelconque des revendications 4 à 9, **caractérisée en ce que,** en présence d'une console de connexion (5) orientée dans l'axe longitudinal (14) du véhicule, les bras tendeurs (10a, 10b) sont orientés perpendiculairement à l'axe longitudinal (14) du véhicule.

11. Sortie de ligne selon l'une quelconque des revendications 4 à 10, **caractérisée en ce que** les bras tendeurs (10a, 10b) sont disposés dans différentes positions en hauteur.

12. Sortie de ligne selon l'une quelconque des revendications 4 à 11, **caractérisée en ce que** les bras tendeurs (10a, 10b) sont toujours orientés à peu près parallèlement entre eux.

13. Sortie de ligne selon l'une quelconque des revendications 1 à 12, **caractérisée en ce que** la structure de cadre (1) comporte, sur la face supérieure (2b), un fond de chargement (15).

14. Sortie de ligne selon l'une quelconque des revendications 1 à 13, **caractérisée en ce que** le plateau tournant (7) est en retrait par rapport à la plaque d'attelage (3) sur la face inférieure (2a).

15. Sortie de ligne selon l'une quelconque des revendications 1 à 14, **caractérisée en ce que** la plaque d'attelage (3) comporte un évidement (16) et une plaque d'appui (17), ladite plaque d'appui (17) s'engageant au-dessus de l'évidement (16) et étant destinée à recevoir le pivot central (4).

16. Sortie de ligne selon la revendication 15, **caractérisée en ce que** le plateau tournant (7) repose par frottement sur un collet d'appui (18) associé à la plaque d'appui (17).

17. Sortie de ligne selon la revendication 15 ou 16, **caractérisée en ce que** la plaque d'appui (17) comporte un creux (19) annulaire, dans lequel s'étendent les faisceaux partiels (6a, 6b).

18. Sortie de ligne selon la revendication 17, **caractérisée en ce que** le creux (19) annulaire est en grande partie fermé vers le bas par le plateau tournant (7).
